# EUROPÄISCHE PATENTSCHRIFT

(11) **EP 2 176 109 B1**
(45) Veröffentlichungstag und Bekanntmachung des Hinweises auf die Patenterteilung: **17.11.2010**
(21) Anmeldenummer: 08774230.0
(22) Anmeldetag: 23.06.2008
(51) Int. Cl.: B60W 30/16, B60W 50/02

(54) **ABSTANDSREGELSYSTEM MIT AUTOMATISCHER ANHALTEFUNKTION**
DISTANCE CONTROL SYSTEM WITH AUTOMATIC STOP FUNCTION
SYSTEME DE REGULATION DE DISTANCE A FONCTION AUTOMATIQUE DE RETENUE

(30) Priorität: 03.08.2007 DE 102007036787
(43) Veröffentlichungstag der Anmeldung: 21.04.2010
(73) Patentinhaber: Robert Bosch GmbH, 70442 Stuttgart (DE)
(72) Erfinder: HECKEL, Joerg, 71277 Rutesheim (DE); LEINEWEBER, Thilo, 70176 Stuttgart (DE); KNOLL, Stefan, 71229 Leonberg (DE)
(86) Internationale Anmeldenummer: PCT/EP2008/057968
(87) Internationale Veröffentlichungsnummer: WO 2009/019068

(56) Entgegenhaltungen:
- EP-A- 1 726 501
- EP-A- 1 772 338
- DE-A1- 10 341 127
- DE-A1- 10 341 128
- DE-A1-102004 047 177
- DE-A1-102005 022 676
- DE-A1-102005 046 045

## Beschreibung

### Stand der Technik

Die Erfindung betrifft ein Abstandsregelsystem (im weiteren: Abstandsregler) mit automatischer Anhalte- und/oder Anfahrfunktion für Kraftfahrzeuge, mit einem abstandsmessenden Fernbereichssensor, einem abstandsmessenden Ultraschallsensor und einer Steuereinheit, die dazu ausgebildet ist, in Abhängigkeit von dem vom Fernbereichssensor gemessenen Abstand eines vorausfahrenden Fahrzeugs in die Längsführung des eigenen Fahrzeugs einzugreifen und, wenn der gemessene Abstand kleiner ist als die Reichweite des Ultraschallsensors, anhand des Signals des Ultraschallsensors zu verifizieren, daß dieser funktionsfähig ist, und dann das Signal des Ultraschallsensors im Rahmen der Anhalte- und/oder Anfahrfunktion auszuwerten.

Ein solcher Abstandsregler wird in DE 10 2005 009 702 A1 beschrieben und ist Teil eines Fahrerassistenzsystems, das auch als ACC-System (Adaptive Cruise Control) bezeichnet wird und dazu dient, den Abstand zu einem vorausfahrenden Fahrzeug automatisch auf einen vorgegebenen, zumeist geschwindigkeitsabhängigen Sollabstand zu regeln. Zu diesem Zweck ist als Fernbereichssensor zumeist ein langreichweitiger Radarsensor (LRR; Long Range Radar) vorgesehen, mit dem die Abstände und Relativgeschwindigkeiten sowie auch die Azimutwinkel vorausfahrender Fahrzeuge gemessen werden. Anhand der Azimutwinkel wird dann dasjenige Fahrzeug identifiziert, das in der eigenen Fahrspur unmittelbar vorausfährt, und dieses Fahrzeug wird als Zielobjekt für die Abstandsregelung ausgewählt. Wenn kein Zielobjekt vorhanden ist, erfolgt eine Regelung auf eine vom Fahrer gewählte Wunschgeschwindigkeit.

Bei den bis heute in der Praxis eingesetzten ACC-Systemen steht die Abstandsregelfunktion zumeist nur bei Geschwindigkeiten oberhalb einer bestimmten Mindestgeschwindigkeit von beispielsweise 30 km/h zur Verfügung, da diese Systeme generell für Fahrten auf Autobahnen oder gut ausgebauten Landstraßen vorgesehen sind und nicht auf stehende Objekte reagieren. Es sind auch ACC-Systeme in Entwicklung, die eine automatische Anhalte und/oder Anfahrfunktion, eine sogenannte Stop & Go Funktion, aufweisen und es somit erlauben, das Fahrzeug automatisch in den Stand zu bremsen, wenn, beispielsweise beim Auffahren auf ein Stauende, der Radarsensor feststellt, daß das Zielobjekt anhält.

Hinau wird auf DE 10 2004 047 177 A und EP-A-1 772 338 verwiesen.

In einigen Fällen ist auch eine automatische Wiederanfahrfunktion vorgesehen, so daß sich das Fahrzeug automatisch wieder in Bewegung setzt, wenn der Radarsensor feststellt, daß das Zielobjekt anfährt. Unter bestimmten Bedingungen, beispielsweise nach Ablauf einer bestimmten Stillstandszeit oder aufgrund einer entsprechend vom Fahrer gewählten Konfiguration, kann das System so arbeiten, daß der Anfahrvorgang nur dann eingeleitet wird, wenn der Fahrer zuvor einen Anfahrhinweis erhalten und diesen durch eine Eingabeoperation bestätigt hat.

Für die Stop & Go Funktion wird generell eine komplexere Sensorik und Auswertealgorithmik benötigt, da das System nun auch auf stehende Ziele reagieren muß und da außerdem eine lückenlose Überwachung des Nahbereichs erforderlich ist, da sich beispielsweise bei einem Stau auch Personen oder andere Hindernisse im Nahbereich unmittelbar vor dem Fahrzeug befinden könnten. Ein einzelner LRR ist für eine vollständige Überwachung des Nahbereichs nicht ausreichend, da sich aufgrund der divergenten Radarkeule tote Winkel beiderseits der Radarkeule ergeben.

In einigen Fällen wird deshalb das LRR durch zwei kurzreichweitige Radarsensoren (SRR; Short Range Radar) ergänzt, die das Nahfeld überwachen.

In der eingangs genannten Druckschrift wird dagegen vorgeschlagen, für die Überwachung des Nahfelds Ultraschallsensoren einzusetzen, die zumeist ohnehin als Bestandteil einer elektronischen Einparkhilfe am Fahrzeug vorhanden sind. Auch die Ultraschallsensoren erlauben es, Objekte zu orten und deren Abstand zu messen. Für eine Abstandsregelung während der Fahrt ist jedoch die Reichweite der Ultraschallsensoren nicht ausreichend. Nach dem Vorschlag der genannten Druckschrift lassen sich die Ultraschallsensoren aber dazu einsetzen, vor einem Anfahrvorgang zu prüfen, ob sich Hindernisse im Nahfeld vor dem eigenen Fahrzeug befinden. Da sich außerdem die Ortungsbereiche des LRR und des Ultraschallsensorsystems (USS) überlappen, ist in den Situationen, in denen sich ein Zielobjekt im Ortungsbereich beider Systeme befindet, eine gegenseitige Funktionsprüfung der Systeme möglich. Wenn die Ultraschallsensoren bei der Entscheidung über einen automatischen Anfahrvorgang zu Hilfe genommen werden sollen, ist dies besonders wesentlich, da Ablagerungen von Schmutz oder Schnee auf den Ultraschallsensoren leicht zu einer Abnahme der Empfindlichkeit oder zu einer völligen Erblindung führen können.

Bei dem bekannten System wird das Signal der Ultraschallsensoren nur für die Entscheidung ausgewertet, ob ein gefahrloses Anfahren des Fahrzeugs möglich ist oder nicht. Die eigentliche Längsführung des Fahrzeugs, d.h., die Steuerung der Beschleunigungs- oder Verzögerungsvorgänge, mit denen der Abstand zum Zielobjekt eingeregelt wird und Anhaltevorgänge so gesteuert werden, daß das Fahrzeug in einem angemessenen Anhalteabstand hinter dem Zielobjekt zu Stehen kommt, erfolgen allein aufgrund der vom Fernbereichssensor gelieferten Abstandssignale.

Bei sehr kleinen Abständen werden jedoch die mit Hilfe des LRR vorgenommenen Abstandsmessungen zu ungenau. Bei bekannten Stop & Go Systemen liegt deshalb der Anhalteabstand, in dem das eigene Fahrzeug hinter dem Zielobjekt zum Stehen gebracht wird, in der Größenordnung von etwa 5 m und damit in einem Abstandsbereich, in dem noch ein verwertbares Signal des LRR vorliegt. Das Wiederanfahren erfolgt nur mit einer verhältnismäßig geringen Dynamik. Insbesondere kann der Anfahrvorgang erst dann ausgelöst werden, wenn das LRR sicher erkannt hat, daß sich das Vorderfahrzeug wieder in Bewegung gesetzt hat. In Stausituationen auf Autobahnen oder Landstraßen ist dieses Systemverhalten durchaus akzeptabel. Im Standverkehr wäre es jedoch in Anbetracht begrenzter Stauräume und im Hinblick auf die durch die Länge der Grünphasen von Ampeln begrenzte Verkehrskapazität wünschenswert, wenn die Anhalteabstände verkürzt und die automatischen Anfahrvorgänge dynamischer durchgeführt werden könnten.

### Offenbarung der Erfindung

Aufgabe der Erfindung ist es deshalb, einen Abstandsregler der eingangs genannten Art zu schaffen, der bei Anhalte- und/oder Anfahrvorgängen eine höhere Dynamik ermöglicht und insbesondere für den Einsatz im Stadtverkehr besser geeignet ist.

Diese Aufgabe wird erfindungsgemäß dadurch gelöst, daß die Anhalte- und/oder Anfahrfunktion einen Betriebsmodus aufweist, in dem eine Abstandsregelung anhand des Signals des Ultraschallsensors erfolgt.

Erfindungsgemäß wird somit das Signal des Ultraschallsensors nicht nur vor einem Anfahrvorgang zur Prüfung eingesetzt, ob die Fahrbahn frei ist, sondern zumindest in bestimmten Betriebsphasen wird das von dem Ultraschallsensor gelieferte Abstandssignal unmittelbar als Führungsgröße für die Eingriffe in die Längsführung des Fahrzeugs genutzt.

Da mit Hilfe der Ultraschallsensorik genaue Abstandsmessungen auch in einem Abstandsbereich deutlich unterhalb von 5 m möglich sind, läßt sich folglich der Anhaltevorgang so steuern, daß das Fahrzeug in einem deutlich kleineren Abstand, beispielsweise in einem Abstand von etwa 2 m hinter dem stehenden Zielobjekt zum Stehen kommt, wie es dem üblichen und angemessenen Verhalten eines menschlichen Kraftfahrers beispielsweise bei der Annäherung an eine Ampelschlange entspricht.

Ebenso kann, sofern eine automatische Anfahrfunktion implementiert und aktiviert ist, das Anfahren des Zielobjekts früher erkannt werden, und dementsprechend kann auch der Anfahrvorgang des eigenen Fahrzeugs früher ausgelöst und mit höherer Dynamik, entsprechend der Dynamik des Zielobjekts, ausgeführt werden, so daß insbesondere im Stadtverkehr eine den Verkehrsfluß fördernde aber dennoch sichere Fahrweise erreicht wird.

Vorteilhafte Ausgestaltungen und Weiterbildungen der Erfindung ergeben sich aus den Unteransprüchen.

In einer besonders vorteilhaften Ausführungsform weist die Steuereinheit einen "City-Modus" auf, in dem ein Anhaltevorgang beim Auffahren auf ein stehendes Hindernis wie folgt abläuft. Der Fernbereichssensor stellt fest, daß das Zielobjekt anhält, und die Steuereinheit leitet eine entsprechende Verzögerung des eigenen Fahrzeugs ein, die wie bei herkömmlichen Systemen so ausgelegt ist, daß das Fahrzeug in einem Anhalteabstand von beispielsweise 5 m zum Stehen käme. Wenn jedoch der Abstand des Zielobjekts so weit abgenommen hat, daß das Objekt auch von den Ultraschallsensoren detektierbar sein müßte, so wird die Ultraschallsensorik aktiviert, und es wird überprüft, ob sie das Zielobjekt ebenfalls orten. Wenn dies der Fall ist, kann als sicher gelten, daß die Ultraschallsensoren funktionsfähig und nicht erblindet sind. Statt das Fahrzeug nun vollständig zum Stillstand zu bringen, veranlaßt die Steuereinheit, daß das Fahrzeug in einen Kriechmodus übergeht, in dem es mit sehr geringer Geschwindigkeit weiter auf das Zielobjekt auffährt, wobei der Abstand nun mit Hilfe der Ultraschallsensorik überwacht wird. Erst wenn ein deutlich kleinerer Anhalteabstand von beispielsweise 2 m erreicht ist, wird das Fahrzeug zum Stehen gebracht.

Gemäß einer Weiterbildung kann eine automatische Anfahrfunktion vorgesehen sein, bei der die Ultraschallsensorik zunächst wie üblich dazu genutzt wird, festzustellen, ob das unmittelbare Vorfeld des Fahrzeugs frei ist. Wenn diese Bedingung erfüllt ist und außerdem - nun mit Hilfe der Ultraschallsensorik - festgestellt wird, daß das sich das Zielobjekt wieder in Bewegung setzt, wird der Anfahrvorgang des eigenen Fahrzeugs eingeleitet, wobei der Beschleunigungsvorgang so gesteuert wird, daß der von den Ultraschallsensoren gemessene Abstand zum Zielobjekt allmählich (von beispielsweise ursprünglich 2 m), entsprechend der zunehmenden Fahrgeschwindigkeit vergrößert wird, bis schließlich ein Abstand (von beispielsweise mehr als 5 m) erreicht wird, in dem wieder auf die herkömmliche Folgefahrtregelung mit Hilfe des Fernbereichssensors umgeschaltet wird.

Wenn bei der Funktionsprüfung festgestellt wurde, daß die Ultraschallsensorik nicht einwandfrei arbeitet, kann gleichwohl ein automatischer Anfahrvorgang ausgelöst werden, ggf. erst nach Bestätigung eines Anfahrbefehls durch den Fahrer, nun allerdings mit geringerer Dynamik und allein anhand der Abstandsdaten des Fernbereichssensors. So kann trotz des Ausfalls der Ultraschallsensorik ein sicherer Abstand zum Zielobjekt eingehalten werden und außerdem hat der Fahrer aufgrund der geringeren Anfahrdynamik Gelegenheit, einzugreifen oder den Anfahrvorgang abzubrechen, wenn er Hindernisse im unmittelbaren Vorfeld des Fahrzeugs feststellt.

Wahlweise kann ein solcher automatischer Anfahrvorgang mit geringerer Dynamik, allein auf der Grundlage des Abstandssignals des Fernbereichssensors, auch dann eingeleitet werden, wenn die Ultraschallsensorik ein Hindernis im Nahbereich festgestellt hat. Beispielsweise kann als Reaktion auf die Ortung des Hindernisses ein optischer und/oder akustischer Warnhinweis an den Fahrer ausgegeben werden und wenn der Fahrer dennoch, beispielsweise durch Tastendruck, bestätigt, daß der Anfahrvorgang eingeleitet werden soll, so werden die Signale der Ultraschallsensorik ignoriert, und der Anfahrvorgang wird mit geringer Dynamik anhand des Signals des Fernbereichssensors durchgeführt.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Fig. 1: eine schematische Darstellung eines Fahrzeugs mit einem erfindungsgemäßen Abstandsregler;
- Fig. 2: eine Illustration des Ablaufs eines mit Hilfe des Abstandreglers gesteuerten Anhaltevorgangs;
- Fig. 3: eine Illustration eines mit Hilfe des Abstandsreglers gesteuerten Anfahrvorgangs; und
- Fig. 4: ein Zeitdiagramm zur Illustration der Arbeitsweise des Abstandsreglers.

### Ausführungsformen der Erfindung

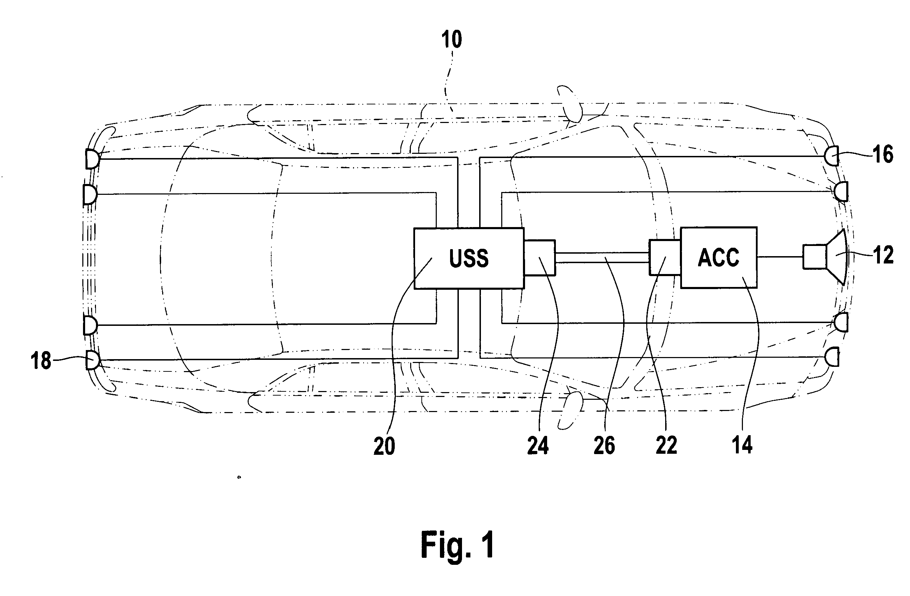

In Fig. 1 ist der Umriß eines Kraftfahrzeugs 10 dargestellt, das mit einem ACC-System ausgerüstet ist, das einen Abstandsregler mit Stop & Go Funktion enthält. Die wesentlichen Komponenten des Abstandsreglers sind ein Fernbereichssensor 12, beispielsweise ein Lidar-Sensor oder ein langreichweitiger Radarsensor (LRR) und eine zugehörige Steuereinheit 14, die durch ein an sich bekanntes elektronisches Datenverarbeitungssystem und zugehörige Software gebildet wird. Der Fernbereichssensor 12 ist vorn in der Mitte des Fahrzeugs eingebaut und dient insbesondere dazu, vorausfahrende Fahrzeuge zu orten, die sich in einem relativ weiten Abstandsbereich vor dem Fahrzeug 10 befinden.

Das Fahrzeug 10 weist außerdem in der vorderen Frontpartie mehrere Ultraschallsensoren 16 und in der Heckpartie mehrere Ultraschallsensoren 18 auf, die zusammen mit einer gemeinsamen Treiberschaltung 20 ein Ultraschallsensorsystem (USS) bilden, das insbesondere die Funktion einer elektronischen Einparkhilfe hat. Die Steuereinheit 14 des ACC-Systems und die Treibereinheit 20 des USS-Systems kommunizieren miteinander über jeweilige Schnittstellen 22 und 24 und über einen Datenbus 26, beispielsweise ein CAN-Bus oder FlexRay-Bus, so daß insbesondere die vorderen Ultraschallsensoren 16 auch vom Abstandsregler genutzt werden können. Über den Datenbus 26 kommuniziert die Steuereinheit 14 außerdem mit weiteren nicht gezeigten Fahrzeugkomponenten, insbesondere mit Sensoren zur Erfassung der dynamischen Daten des Fahrzeugs 10 (Radgeschwindigkeiten, Gierrate, Lenkwinkel etc.) und Aktoren (Motormanagement, Bremssystem), über die das ACC-System in die Längsführung des Fahrzeugs eingreift.

Die Treibereinheit 20 des USS-Systems kann über den Datenbus 26 vom ACC-System eine Anfrage zur Objektdetektion empfangen und daraufhin die vorderen Ultraschallsensoren 16 aktivieren. Umgekehrt kann die Treibereinheit 20 Statusinformationen über das USS-System, die beispielsweise mit Hilfe eines Selbsttests ermittelt werden, sowie Abstands- und Positionsinformation über etwa von den Ultraschallsensoren 16 detektierte Objekte an die Steuereinheit 14 melden.

Die Kommunikation und Zusammenarbeit zwischen dem ACC-System und dem USS-System bezieht sich insbesondere auf Anhalte- und Anfahrvorgänge des Fahrzeugs 10 und soll nun anhand typischer Verkehrssituationen illustriert werden. Dabei wird vorausgesetzt, daß das ACC-System auf einen Betriebsmodus eingestellt ist, der besonders an die Bedingungen im Stadtverkehr angepaßt ist (City-Modus).

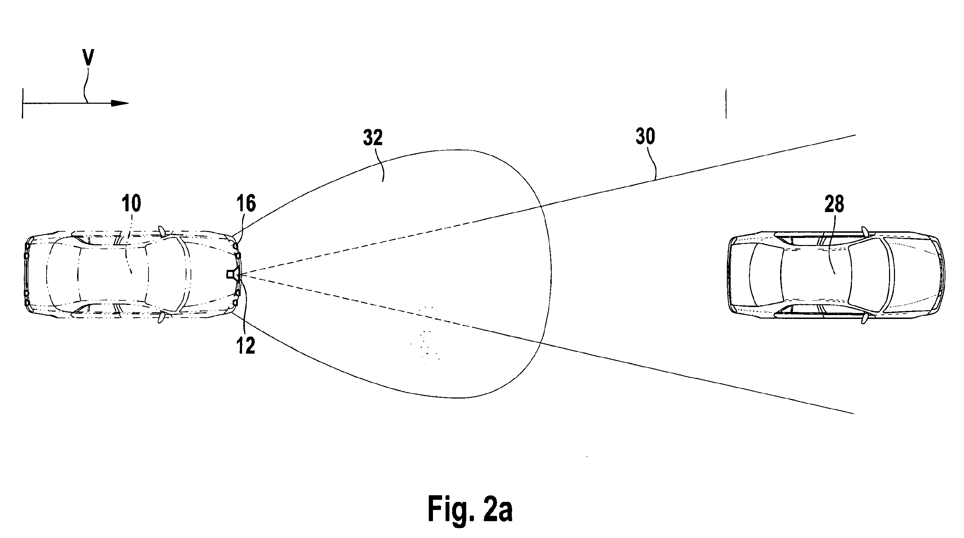

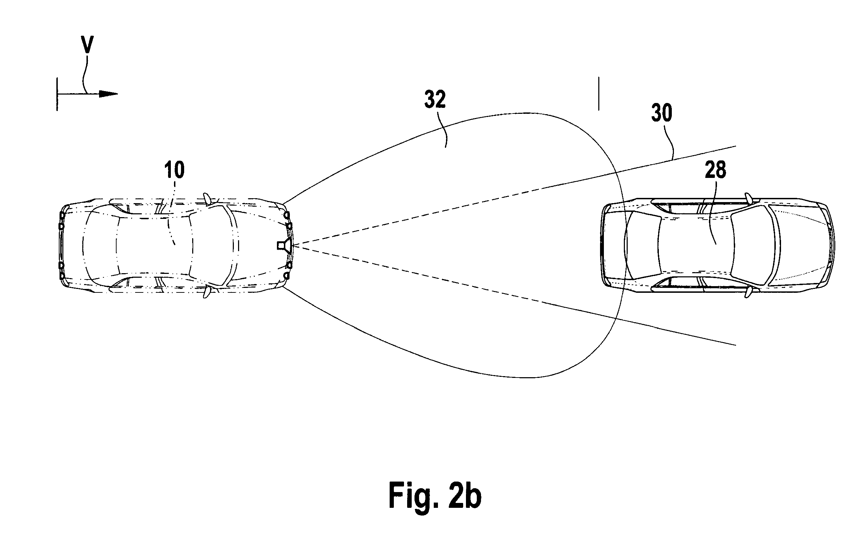

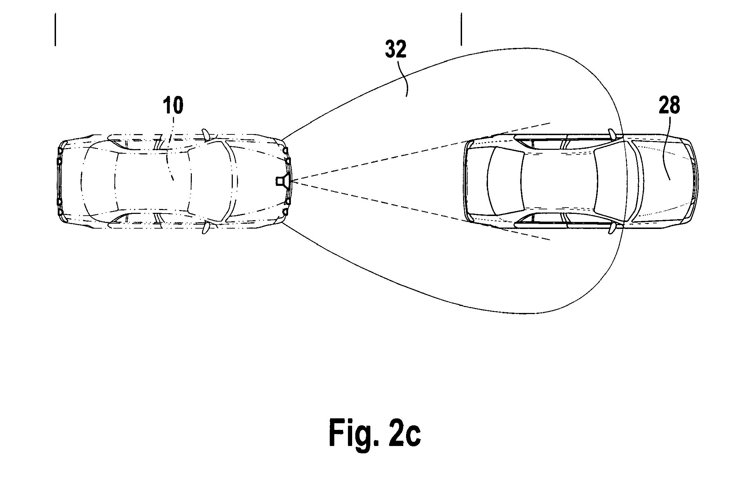

Fig. 2 illustriert eine Situation, in der das mit den Systemen nach Fig. 1 ausgerüstete Fahrzeug 10 auf ein weiter vorn in derselben Spur haltendes Fahrzeug 28 auffährt. Ein von einer Basislinie ausgehender Vektorpfeil V über dem Fahrzeug 10 symbolisiert, daß dieses Fahrzeug in Bewegung ist. Durch eine Basislinie ohne Vektorpfeil über dem Fahrzeug 28 soll angedeutet werden, daß das Fahrzeug 28 steht. Im oberen Bild in Fig. 2 befindet sich das Fahrzeug 28 innerhalb eines Kegelförmigen Ortungsbereiches 30 des Fernbereichssensors 12, aber noch außerhalb eines deutlich kürzeren Ortungsbereiches 32 der Ultraschallsensoren 16. Der Abstand zwischen den Fahrzeugen 10 und 28 kann folglich nur mit Hilfe des Fernbereichssensors 12 überwacht werden, und dessen Abstandsdaten bilden die Grundlage für die Längsführung des Fahrzeugs 10 unter der Kontrolle der Steuereinheit 14.

Daran, daß die vom Fernbereichssensor 12 gemessene Relativgeschwindigkeit des Fahrzeugs 28 relativ zum Fahrzeug 10 dem Betrage nach gleich der Eigengeschwindigkeit des Fahrzeugs 10 ist, erkennt die Steuereinheit 14, daß das Fahrzeug 28 steht. Sie löst deshalb einen Verzögerungsvorgang aus, durch den das Fahrzeug 10 so abgebremst wird, daß es normalerweise in einem Abstand in der Größenordnung von etwa 5 m hinter dem Fahrzeug 28 zum Stehen käme. Dieser Abstand entspricht dem üblichen Anhalteabstand, der auch bei einem Betrieb außerhalb des City-Modus auf Landstraßen oder Autobahnen gilt.

Im mittleren Bild in Fig. 2 hat sich das Fahrzeug 10 dem Fahrzeug 28 weiter angenähert, so daß sich das Heck des Fahrzeugs 28 nun auch im Ortungsbereich 32 der Ultraschallsensoren befindet. Die Ortungsdaten des Fernbereichssensors 12 sind unterhalb eines gewissen Abstands, der beispielsweise in der Größenordnung von etwa 4 m liegt, nicht mehr genau und verläßlich genug für eine zufriedenstellende Abstandsregelung. Dies wird in Fig. 2 dadurch symbolisiert, daß die Begrenzungslinien in diesem unteren Abstandsbereich gestrichelt dargestellt sind. Im mittleren Bild in Fig. 2 ist der Abstand des Fahrzeugs 28 jedoch noch so groß, daß es von beiden Ortungssystemen erfaßt werden kann.

Diese Bedingung, daß das Heck des Fahrzeugs 28 im Ortungsbereich 32 der Ultraschallsensoren liegt, wird anhand der Daten des Fernbereichssensors 12 von der Steuereinheit 14 erkannt, und sie sendet daraufhin eine Anfrage zur Objektdetektion an die Treibereinheit 20 des USS-Systems. Dieses System aktiviert daraufhin die vorderen Ultraschallsensoren 16 und wertet deren Detektionssignale aus. Wenn alle (im gezeigten Beispiel vier) Ultraschallsensoren 16 einwandfrei arbeiten, wird das Heck des Fahrzeugs 28 auch von der Ultraschallsensorik detektiert, und ein entsprechendes Detektions- und Abstandssignal wird von der Treibereinheit 20 an die Steuereinheit 14 gemeldet.

Wenn das USS-System nicht einwandfrei arbeitet, beispielsweise aufgrund einer Systemstörung oder eines Systemausfalls oder weil einer oder mehrere der Ultraschallsensoren 16 durch Verschmutzung erblindet sind, wird dieser Status ebenfalls an die Steuereinheit 14 gemeldet. Aus Sicherheitsgründen kann das System so ausgelegt sein, daß die Treibereinheit 20 einen Fehler meldet, wenn auch nur einer der Ultraschallsensoren 16 nicht das erwartete Signal liefert. Wenn keiner der Ultraschallsensoren das Fahrzeug 28 ortet, so erkennt die Steuereinheit 14 anhand des Ausbleibens des Ortungssignals, daß das USS-System nicht einwandfrei arbeitet.

Die Steuereinheit 14 kann auf diese Weise zuverlässig feststellen, ob die vom USS-System gelieferten Daten über das Fahrzeug 28 und ggf. über andere Objekte im Nahbereich verläßlich sind oder nicht. Wenn diese Daten verläßlich sind, veranlaßt die Steuereinheit 14, daß das Fahrzeug 10 nicht entsprechend der üblichen Anhaltecharakteristik in den Stand gebremst wird, sondern das Fahrzeug kurz vor Erreichen des Stillstands in einem Kriechmodus übergeht, in dem es mit sehr geringer Geschwindigkeit weiter vorrollt. Bei einem Fahrzeug mit Automatikgetriebe und Drehmomentwandler kann dieser Kriechmodus etwa dadurch realisiert werden, daß der Motor im Leerlauf betrieben wird, die Bremse jedoch gelöst ist.

Im unteren Bild in Fig. 2 hat sich das Fahrzeug 10 im Kriechmodus so weit dem Fahrzeug 28 angenähert, daß der Abstand zum Heck dieses Fahrzeugs jetzt nur noch mit Hilfe der Ultraschallsensoren verläßlich genug gemessen werden kann. Die Steuereinheit 14 empfängt fortlaufend das von der Treibereinheit 20 übermittelte Abstandssignal, und erst wenn der Abstand auf einen für Stadtverkehr typischen Anhalteabstand von beispielsweise 2 m abgenommen hat, wird das Fahrzeug 10 endgültig in den Stand gebremst.

Während beide Fahrzeuge 10 und 28 stehen, bleiben die vorderen Ultraschallsensoren 16 aktiv, um das Vorfeld des Fahrzeugs zu überwachen und festzustellen, ob Personen oder sonstige Hindernisse in den Fahrkorridor unmittelbar vor dem Fahrzeug 10 gelangen, so daß ein erneuter Anfahrvorgang nicht oder jedenfalls nicht ohne besondere Aufmerksamkeit des Fahrers möglich wäre.

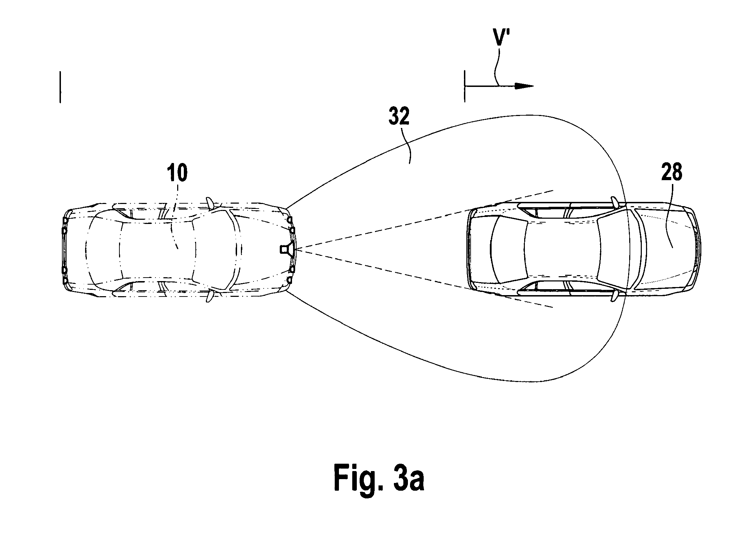

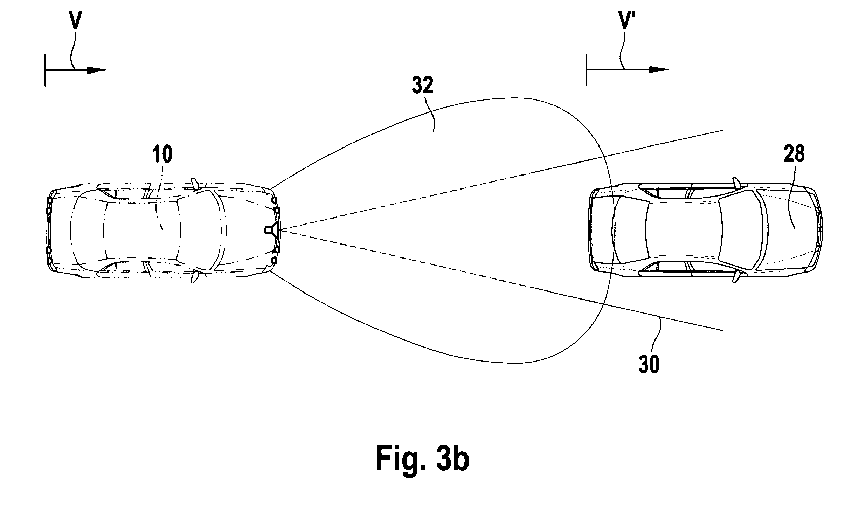

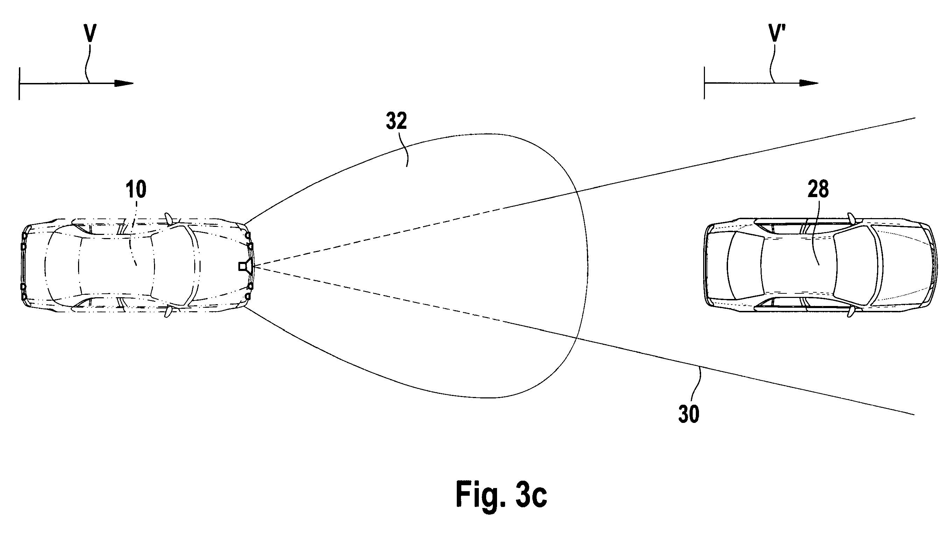

In Fig. 3 ist auf analoge Weise wie in Fig. 2 ein automatischer Anfahrvorgang dargestellt. Dabei soll angenommen werden, daß das unmittelbare Vorfeld des Fahrzeugs 10 frei ist.

Im oberen Bild in Fig. 3 setzt sich das vordere Fahrzeug 28 in Bewegung, wie durch einen Vektorpfeil V' symbolisiert wird. Die Ausgangssituation ist dabei die gleiche wie im unteren Bild in Fig. 2, d.h., der Abstand zwischen den beiden Fahrzeugen beträgt im Stillstand etwa 2 m. Obgleich das Signal des Fernbereichssensors 12 in diesem Zustand unzuverlässig ist, kann mit Hilfe der Ultraschallsensoren 16 anhand einer Änderung des Fahrzeugabstands erkannt werden, daß das Fahrzeug 28 anfährt.

Nach einer Überprüfung, daß sich keine sonstigen Hindernisse im Ortungsbereich 32 der Ultraschallsensoren befinden, gibt daher die Steuereinheit 14 den Befehl für einen automatischen Anfahrvorgang des Fahrzeugs 10. Unter bestimmten Bedingungen, etwa wenn beide Fahrzeuge 10 und 28 für längere Zeit gestanden haben, kann anstelle des automatischen Anfahrbefehls ein Anfahrhinweis an den Fahrer des Fahrzeugs 10 ausgegeben werden, und erst wenn der Fahrer durch einen Tastendruck den Befehl zum Anfahren gibt, wird der automatische Anfahrvorgang eingeleitet.

Unter der Kontrolle der Steuereinheit 14 werden die Fahrzeugbremsen gelöst, und die (positive) Beschleunigung des Fahrzeugs 10 wird anhand des Signals der Ultraschallsensoren 16 so geregelt, daß das Fahrzeug 10 zwar anfährt, sein Abstand zum Fahrzeug 28 dabei aber entsprechend der zunehmenden Fahrgeschwindigkeit nach und nach größer wird. Das kann beispielsweise in der Form geschehen, daß das Motormanagement des Fahrzeugs 10 den Anfahrvorgang bis zu einer bestimmten Mindestgeschwindigkeit autonom steuert, während die Ultraschallsensoren den Abstand zum Fahrzeug 28 überwachen und die Steuereinheit 14 nur dann im Sinne einer Verringerung der Beschleunigung eingreift, wenn dieser Abstand abnimmt oder nicht schnell genug größer wird.

Im mittleren Bild in Fig. 3 sind beide Fahrzeuge 10 und 28 in Bewegung, wie durch die Vektorpfeile V und V' angedeutet wird. Die Geschwindigkeit des Fahrzeugs 28 ist größer als die des Fahrzeugs 10, und der Abstand zwischen den beiden Fahrzeugen hat so weit zugenommen, daß der Abstand und die Relativgeschwindigkeit wieder mit Hilfe des Fernbereichssensors 12 genau gemessen werden können. Wenn der Fernbereichssensor 12 ein konsistentes Signal für den Abstand des Fahrzeugs 28 liefert, wird in der Steuereinheit 14 von der Regelung anhand der Ultraschallsensoren auf die Regelung anhand des Fernbereichssensors 12 umgeschaltet und die vorderen Ultraschallsensoren 16 werden deaktiviert. Dieser Umschaltvorgang kann bereits während des Anfahrprogramms erfolgen, indem der Anfahrvorgang grundsätzlich autonom durch das Motormanagement des Fahrzeugs 10 gesteuert wird.

Im unteren Bild in Fig. 3 haben die Geschwindigkeiten beider Fahrzeuge weiter zugenommen und der Abstand hat sich so weit vergrößert, daß das Fahrzeug 28 jetzt nur noch mit dem Fernbereichssensor 12 geortet werden kann. In diesem Zustand erfolgt bei einer geeigneten Mindestgeschwindigkeit des Fahrzeugs 10 der Übergang auf die "normale" ACC-Abstandsregelung.

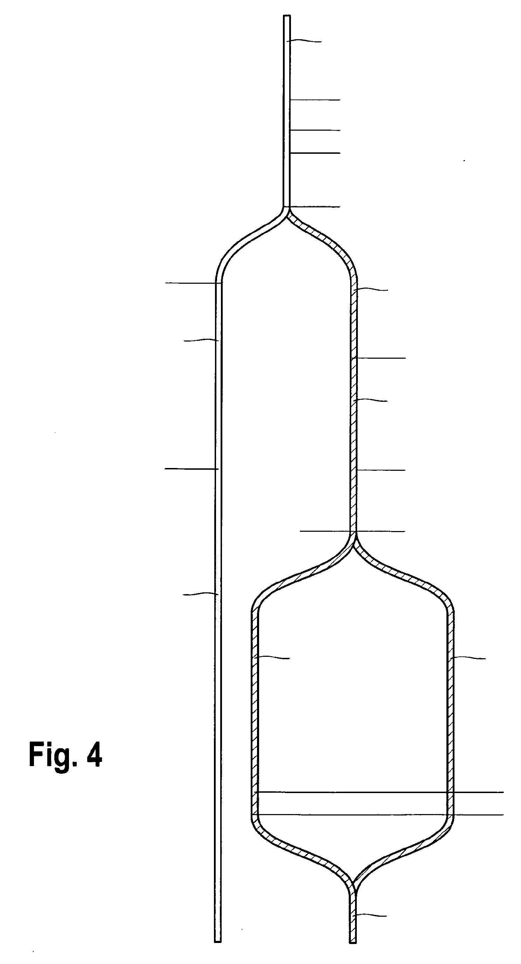

In Fig. 4 sind verschiedene Varianten der oben geschilderten grundsätzlichen Abläufe etwas detaillierter in einem Zeitdiagramm dargestellt. Die Zeitachse verläuft von oben nach unten.

In einem Betriebsmodus A sind beide Fahrzeuge 10 und 28 in Bewegung, und die Längsführung des Fahrzeugs 10 erfolgt auf der Grundlage des Signals des Fernbereichssensors 12 (LRR). Der Abstand zwischen den beiden Fahrzeugen wird von der Steuereinheit 14 auf einen vorgegebenen, geschwindigkeitsabhängigen Sollabstand oder, besser gesagt, eine vorgegebene Zeitlücke geregelt. Zu einem Zeitpunkt 1 stellt der Fernbereichssensor 12 fest, daß das Zielobjekt, d.h., das Fahrzeug 28 angehalten hat. Daraufhin löst die Steuereinheit 14 einen Anhaltevorgang des Fahrzeugs 10 aus, bei dem das Fahrzeug 10 kontrolliert in den Stand gebremst wird und zwar so, daß es in einem relativ großen Anhalteabstand von beispielsweise 5 m hinter dem Fahrzeug 28 zum Stehen käme, wenn der Anhaltevorgang unverändert fortgesetzt würde.

Zu einem Zeitpunkt 2 hat der Abstand zwischen den Fahrzeugen auf die Reichweite der Ultraschallsensoren 16 abgenommen. Dies entspricht dem mittleren Bild in Fig. 2. Daraufhin werden zu einem Zeitpunkt 3 die vorderen Ultraschallsensoren 16 aktiviert.

Wenn die Ultraschallsensoren einwandfrei arbeiten, sollte nun innerhalb einer relativ kurzen Zeitspanne von beispielsweise einer Sekunde oder innerhalb einer Fahrstrecke von etwa 1 m das Fahrzeug 28 von den Ultraschallsensoren geortet werden. Im gezeigten Beispiel geschieht dies zu einem Zeitpunkt 4a. Daraufhin geht die Steuereinheit 14 in einen Betriebsmodus B über, in dem die Längsführung des Fahrzeugs 10 auf der Grundlage des Abstandssignals der Ultraschallsensoren 16 erfolgt (schraffiert dargestellter rechter Arm des Zeitdiagramms in Fig. 4).

Das ursprüngliche Anhalteprogramm für das Fahrzeug 10 wird so modifiziert, daß das Fahrzeug nicht schon bei einem Abstand von 5 m (d1) zum Stillstand gebracht wird, sondern statt dessen in eine Kriechfahrt übergeht, in der es sich dem Fahrzeug 28 langsam weiter annähert, wobei der Abstand mit Hilfe der Ultraschallsensoren überwacht wird. Erst wenn zu einem Zeitpunkt 4b der kleinere Anhalteabstand von etwa 2 m (d2) erreicht ist, wird das Fahrzeug 10 endgültig zum Stillstand gebracht, und das System geht in einen Betriebsmodus C über, in dem mit Hilfe der Ultraschallensoren 16 weiterhin überwacht wird, ob das Fahrzeug 28 noch geortet werden kann, und außerdem, ob sich sonstige Hindernisse vor dem Fahrzeug 10 befinden.

Wenn zu einem Zeitpunkt 5 die Ultraschallsensoren feststellen, daß das Fahrzeug 28 wieder anfährt, wird nochmals geprüft, ob die Fahrbahn frei ist und wenn dies zu einem Zeitpunkt 6a bestätigt wird, geht das System in einen Betriebsmodus D über in dem ein Anfahrvorgang mit hoher Dynamik ausgelöst wird, d.h., das Fahrzeug 10 wird unmittelbar nach dem Anfahren des Fahrzeugs 28 in Bewegung gesetzt und so stark beschleunigt, daß der Abstand zwischen den beiden Fahrzeugen nur allmählich größer wird.

Wenn zu einem Zeitpunkt 7 der Abstand so weit zugenommen hat, das Fahrzeug 28 auch mit dem Fernbereichssensor 12 wieder detektiert werden kann, wird zu einem Zeitpunkt 8 das Ultraschallsensorsystem deaktiviert, und das System geht in einen Betriebsmodus E über, in dem wie im Modus A die Längsführung wieder auf der Grundlage des Signals des Fernbereichssensors erfolgt.

Falls nach dem Zeitpunkt 5 zu einem Zeitpunkt 6b mit Hilfe der Ultraschallsensoren 16 festgestellt wird, daß sich ein Hindernis unmittelbar vor dem Fahrzeug 10 befindet, geht das System statt in dem Modus D in einen Modus D' über, in dem zwar die Längsführung ebenfalls auf der Grundlage des Ultraschallsensorsystems erfolgt, der Anfahrvorgang jedoch mit geringerer Dynamik gesteuert wird. Gegebenenfalls wird der Anfahrvorgang in diesem Fall erst nach Ausgabe eines Warnsignals an den Fahrer und nach Bestätigung des Anfahrbefehls durch den Fahrer eingeleitet. Außerdem ist die Beschleunigung des Fahrzeugs 10 geringer, so daß der Abstand zum Fahrzeug 28 schneller anwächst und der Fahrer des Fahrzeugs 10 Gelegenheit hat, auf etwa von ihm selbst wahrgenommene Hindernisse zu reagieren.

Auch nach dem Betriebsmodus D' erfolgt zum Zeitpunkt 8 ein Übergang in den Modus E, in dem die Längsführung wieder vom Fernbereichssensor 12 übernommen wird.

Der linke Ast in Fig. 4 repräsentiert den Fall, daß nach der Aktivierung der Ultraschallsensoren 16 zum Zeitpunkt 3 nicht zum Zeitpunkt 4a das Zielobjekt erfaßt wird, sondern die vorgegebene Zeitspanne (ca. 1 s) abläuft, ohne daß die Ultraschallsensoren das Zielobjekt verifizieren. Daraus muß geschlossen werden, daß die Ultraschallsensoren 16 (oder zumindest einer von ihnen) erblindet ist oder eine sonstige Störung im Ultraschallsensorsystem vorliegt, so daß eine Abstandsregelung auf der Basis der Ultraschallsensoren nicht möglich ist. Deshalb verbleibt das System im Betriebsmodus A, und Zeitpunkt 4c wird das Fahrzeug 10 in dem Anhalteabstand d1 von etwa 5 m angehalten. Der Abstand zwischen den Fahrzeugen bleibt somit so groß, daß der Fernbereichssensor 12 auch während der Stillstandsphase ein verläßliches und auswertbares Signal liefert und somit einen etwaigen erneuten Anfahrvorgang des Fahrzeugs 28 erkennen kann.

Wenn zum Zeitpunkt 5 das Fahrzeug 28 wieder anfährt, so wird im Betriebsmodus A unter der Kontrolle des Fernbereichssensors 12 ein Anfahrvorgang ausgelöst, der jedoch eine deutlich geringere Dynamik hat als der Anfahrvorgang im Betriebsmodus D. Durch diese geringere Dynamik wird in Anbetracht der Erblindung der Ultraschallsensoren sichergestellt, daß der Fahrer die Fahrbahn selbst auf Hindernisfreiheit prüfen und auf etwaige Hindernisse angemessen reagieren kann. Gegebenenfalls wird auch in diesem Fall ähnlich wie im Betriebsmodus D' der Anfahrvorgang nicht automatisch eingeleitet - und ggf. auch noch nicht nach einem vom Fahrer gegebenen Anfahrbefehl - sondern es wird zunächst ein Warnhinweis ausgegeben, der den Fahrer auf die Erblindung der Ultraschallsensorik hinweist, und erst wenn der Fahrer den Anfahrbefehl dennoch bestätigt, wird der Anfahrvorgang eingeleitet.

## Patentansprüche

1. Abstandsregelsystem mit automatischer Anhalte- und/oder Anfahrfunktion für Kraftfahrzeuge (10), mit einem abstandsmessenden Fernbereichssensor (12), einem abstandsmessenden Ultraschallsensor (16) und einer Steuereinheit (14), die dazu ausgebildet ist, in Abhängigkeit von dem vom Fernbereichssensor (12) gemessenen Abstand eines vorausfahrenden Fahrzeugs (28) in die Längsführung des eigenen Fahrzeugs (10) einzugreifen und, wenn der gemessene Abstand kleiner ist als die Reichweite des Ultraschallsensors (16), anhand des Signals des Ultraschallsensors zu verifizieren, daß dieser funktionsfähig ist, und dann das Signal des Ultraschallsensors (16) im Rahmen der Anhalte- und/oder Anfahrfunktion auszuwerten, **dadurch gekennzeichnet, daß** die Anhalte- und/oder Anfahrfunktion einen Betriebsmodus (B, D) aufweist, in dem eine Abstandsregelung anhand des Signals des Ultraschallsensors (16) erfolgt.

2. Abstandsregelsystem nach Anspruch 1, **dadurch gekennzeichnet, daß** die Steuereinheit (14) dazu ausgebildet ist, wenn festgestellt wird, daß das vorausfahrende Fahrzeug (28) anhält oder steht, das Fahrzeug (10) durch Längsführung auf der Grundlage des Signals des Fernbereichssensors (12) so in den Stand zu bremsen, daß es in einem ersten Anhalteabstand (d1) zum Stillstand kommt, der kleiner ist als die maximale Reichweite des Ultraschallsensors (16), und bei Erfassung des vorausfahrenden Fahrzeugs (28) durch den Ultraschallsensor (16) in einen Betriebsmodus (B) überzugehen, in dem bei Längsführung auf der Grundlage des Signals des Ultraschallsensors (16) in einer Kriechfahrt der Abstand zum vorderen Fahrzeug (28) weiter verringert wird, bis das Fahrzeug (10) bei einem kleineren zweiten Anhalteabstand (d2) zum Stillstand gebracht wird.

3. Abstandsregelsystem nach Anspruch 2, **dadurch gekennzeichnet, daß** die Steuereinheit (14) dazu ausgebildet ist, in einem Betriebsmodus (A) zu bleiben, in dem die Längsführung auf der Grundlage des Signals des Fernbereichssensors (12) erfolgt, wenn, nachdem der Abstand zu dem vorausfahrenden Fahrzeug auf einen Wert abgenommen hat, der kleiner ist als die Reichweite des Ultraschallsensors (16), das vordere Fahrzeug (28) nicht innerhalb eines vorgegebenen Zeit- oder Fahrstreckenintervalls auch vom Ultraschallsensor (16) detektiert wird.

4. Abstandsregelsystem nach einem der vorstehenden Ansprüche, **dadurch gekennzeichnet, daß** die automatische Anfahrfunktion ein Betriebsmodus (D) aufweist, in dem die Längsführung des Fahrzeugs (10) auf dem Signal des Ultraschallsensors (16) basiert.

5. Abstandsregelsystem nach Anspruch 4, **dadurch gekennzeichnet, daß** die Steuereinheit (14) dazu ausgebildet ist, in einem Betriebsmodus (C), in dem das eigene Fahrzeug (10) steht, anhand des Signals des Ultraschallsensors (16) zu entscheiden, ob die Fahrbahn, abgesehen von dem haltenden vorderen Fahrzeug (28), frei ist oder ob sich sonstige Hindernisse unmittelbar vor dem eigenen Fahrzeug (10) befinden.

6. Abstandsregelsystem nach Anspruch 5, **dadurch gekennzeichnet, daß** die automatische Anfahrfunktion zwei Betriebsmodi (D und D') aufweist, in denen die Längsführung auf der Basis des Signals des Ultraschallsensors (16) erfolgt, diese beiden Betriebsmodi sich jedoch in ihrer Dynamik unterscheiden, und daß die Steuereinheit (14) dazu ausgebildet ist, den Betriebsmodus (D') mit der geringeren Dynamik zu wählen, wenn festgestellt wurde, daß sich ein Hindernis unmittelbar vor dem eigenen Fahrzeug (10) befindet.

7. Abstandsregelsystem nach Anspruch 6, **dadurch gekennzeichnet, daß** die Steuereinheit (14) dazu ausgebildet ist, einen Warnhinweis an den Fahrer auszugeben, bevor ein Anfahrvorgang in dem Betriebsmodus (D') mit der geringeren Dynamik ausgelöst wird.

8. Abstandsregelsystem nach Anspruch 7, **dadurch gekennzeichnet, daß** die Steuereinheit (14) nach Ausgabe des Warnhinweises den Anfahrvorgang nur dann auslöst, wenn der Fahrer einen Anfahrbefehl gibt.

9. Abstandsregelsystem nach einem der vorstehenden Ansprüche, **dadurch gekennzeichnet, daß** die Steuereinheit (14) dazu ausgebildet, während eines Stillstands des eigenen Fahrzeugs (10) in dem Betriebsmodus (A), in dem die Längsführung auf dem Signal des Fernbereichssensors (12) beruht, einen Warnhinweis an den Fahrer auszugeben, bevor nach dem Anfahren des vorderen Fahrzeugs (28) oder einem Anfahrbefehl des Fahrers die automatische Anfahrfunktion ausgelöst wird.

## Claims

1. Distance control system with automatic stop and/or start function for motor vehicles (10), having a distance-measuring long-range sensor (12), a distance-measuring ultrasonic sensor (16) and a control unit (14) which is designed to intervene in the longitudinal guidance of the vehicle (10) in question as a function of the distance, measured by the long-range sensor (12), of a vehicle (28) travelling ahead, and to check, on the basis of the signal of the ultrasonic sensor, whether the ultrasonic sensor is functionally capable when the measured distance is shorter than the range of said ultrasonic sensor (16), and then to evaluate the signal of the ultrasonic sensor (16) within the scope of the stop and/or start function, **characterized in that** the stop and/or start function has an operating mode (B, D) in which distance control is carried out on the basis of the signal of the ultrasonic sensor (16).

2. Distance control system according to Claim 1, **characterized in that** the control unit (14) is designed to brake the vehicle (10) through longitudinal guidance on the basis of the signal of the long-range sensor (12) when it is detected that the vehicle (28) travelling ahead stops or is stationary, said braking to be carried out to the stationary state in a such a way that at a first stopping distance (d1) it comes to a standstill which is shorter than the maximum range of the ultrasonic sensor (16), and to go into an operating mode (B) when the vehicle (28) travelling ahead is detected by the ultrasonic sensor (16), in which operating mode (B) the distance from the vehicle (28) in front is reduced further in a creeping travel mode in the event of longitudinal guidance on the basis of the signal of the ultrasonic sensor (16), until the vehicle (10) is brought to a standstill at a relatively small, second stopping distance (d2).

3. Distance control system according to Claim 2, **characterized in that** the control unit (14) is designed to remain in an operating mode (A) in which the longitudinal guidance takes place on the basis of the signal of the long-range sensor (12) if, after the distance from the vehicle travelling ahead has decreased to a value which is smaller than the range of the ultrasonic sensor (16), the vehicle (28) in front is not also detected by the ultrasonic sensor (16) within a predefined time interval or distance interval.

4. Distance control system according to one of the preceding claims, **characterized in that** the automatic start function has an operating mode (D) in which the longitudinal guidance of the vehicle (10) is based on the signal of the ultrasonic sensor (16).

5. Distance control system according to Claim 4, **characterized in that** the control unit (14) is designed to decide, in an operating mode (C) in which the vehicle (10) in question is stationary, on the basis of the signal of the ultrasonic sensor (16), whether the carriageway is free, apart from the stopping vehicle (28) in front, or whether other obstacles are located directly in front of the vehicle (10) in question.

6. Distance control system according to Claim 5, **characterized in that** the automatic start function has two operating modes (D and D') in which the longitudinal guidance takes place on the basis of the signal of the ultrasonic sensor (16), but these two operating modes differ in their dynamics, and **in that** the control unit (14) is designed to select the operating mode (D') with the lower dynamics if it has been detected that an obstacle is located directly in front of the vehicle (10) in question.

7. Distance control system according to Claim 6, **characterized in that** the control unit (14) is designed to output a warning message to the driver before a starting process is triggered in the operating mode (D') with the lower dynamics.

8. Distance control system according to Claim 7, **characterized in that**, after the outputting of the warning message, the control unit (14) triggers the starting process only if the driver transmits a starting command.

9. Distance control system according to one of the preceding claims, **characterized in that** the control unit (14) is designed to output, during a stationary state of the vehicle (10) in question in the operating mode (A) in which the longitudinal guidance is based on the signal of the long-range sensor (12), a warning message to the driver before the automatic start function is triggered after the vehicle (28) in front starts or after a starting command from the driver.

## Revendications

1. Système de régulation de l'écart avec fonction automatique d'arrêt et/ou de démarrage pour véhicules automobiles (10), comprenant un détecteur de zone distante (12) mesurant l'écart, un détecteur à ultrasons (16) mesurant l'écart et une unité de commande (14) qui est configurée pour intervenir dans le guidage longitudinal du véhicule propre (10) en fonction de l'écart d'un véhicule qui précède (28) mesuré par le détecteur de zone distante (12) et, lorsque l'écart mesuré est inférieur à la portée du détecteur à ultrasons (16), pour vérifier au moyen du signal du détecteur à ultrasons si celui-ci est opérationnel et pour interpréter alors le signal du détecteur à ultrasons (16) dans le cadre de la fonction d'arrêt et/ou de démarrage, **caractérisé en ce que** la fonction d'arrêt et/ou de démarrage présente un mode de fonctionnement (B, D) dans lequel une régulation de l'écart s'effectue au moyen du signal du détecteur à ultrasons (16).

2. Système de régulation de l'écart selon la revendication 1, **caractérisé en ce que** l'unité de commande (14) est configurée pour, lorsqu'il est constaté que le véhicule qui précède (28) s'arrête ou est à l'arrêt, freiner le véhicule (10) par guidage longitudinal sur la base du détecteur de zone distante (12) de telle sorte qu'il s'immobilise à un premier écart d'arrêt (d1) qui est inférieur à la portée maximale du détecteur à ultrasons (16), et en cas de détection du véhicule qui précède (28) par le détecteur à ultrasons (16), passer dans un mode de fonctionnement (B) dans lequel, lors du guidage longitudinal sur la base du signal du détecteur à ultrasons (16), l'écart par rapport au véhicule qui précède (28) est réduit davantage dans une marche lente jusqu'à ce que le véhicule (10) soit amené à l'arrêt à un deuxième écart d'arrêt (d2) plus petit.

3. Système de régulation de l'écart selon la revendication 2, **caractérisé en ce que** l'unité de commande (14) est configurée pour demeurer dans un mode de fonctionnement (A) dans lequel le guidage longitudinal s'effectue sur la base du signal du détecteur de zone distante (12) lorsque, après que l'écart par rapport au véhicule qui précède s'est réduit à une valeur qui est inférieure à la portée du détecteur à ultrasons (16), le véhicule qui précède (28) n'est pas détecté aussi par le détecteur à ultrasons (16) dans un intervalle de temps ou de trajet parcouru prédéfini.

4. Système de régulation de l'écart selon l'une des revendications précédentes, **caractérisé en ce que** la fonction de démarrage automatique présente un mode de fonctionnement (D) dans lequel le guidage longitudinal du véhicule (10) se base sur le signal du détecteur à ultrasons (16).

5. Système de régulation de l'écart selon la revendication 4, **caractérisé en ce que** l'unité de commande (14) est configurée pour, dans un mode de fonctionnement (C) dans lequel le véhicule propre (10) est à l'arrêt, décider au moyen du signal du détecteur à ultrasons (16) si la voie de circulation est libre, exception faite du véhicule qui précède (28) et qui est à l'arrêt, ou si d'autres obstacles se trouvent directement devant le véhicule propre (10).

6. Système de régulation de l'écart selon la revendication 5, **caractérisé en ce que** la fonction de démarrage automatique présente deux modes de fonctionnement (D et D') dans lesquels le guidage longitudinal s'effectue sur la base du signal du détecteur à ultrasons (16), ces deux modes de fonctionnement se distinguant cependant du point de vue de leur dynamique, et que l'unité de commande (14) est configurée pour sélectionner le mode de fonctionnement (D') ayant la dynamique la plus faible lorsqu'il a été constaté qu'un obstacle se trouve directement devant le véhicule propre (10).

7. Système de régulation de l'écart selon la revendication 6, **caractérisé en ce que** l'unité de commande (14) est configurée pour délivrer une notification d'alerte au conducteur avant qu'un processus de démarrage soit déclenché dans le mode de fonctionnement (D') ayant la dynamique la plus faible.

8. Système de régulation de l'écart selon la revendication 7, **caractérisé en ce que** l'unité de commande (14), après avoir délivré la notification d'alerte, ne déclenche le processus de démarrage que si le conducteur donne une instruction de démarrage.

9. Système de régulation de l'écart selon l'une des revendications précédentes, **caractérisé en ce que** l'unité de commande (14) est configurée pour, pendant une immobilisation du véhicule propre (10) dans le mode de fonctionnement (A) dans lequel le guidage longitudinal s'appuie sur le signal du détecteur de zone distante (12), délivrer une notification d'alerte au conducteur, après le démarrage du véhicule à l'avant (28) ou après qu'une instruction de démarrage du conducteur, avant que la fonction de démarrage automatique n'ait été déclenché.
